# EUROPEAN PATENT APPLICATION

(11) **EP 3 628 630 A1**
(43) Date of publication of application: **01.04.2020**
(21) Application number: 19195682.0
(22) Date of filing: 05.09.2019
(51) Int. Cl.: B66B 7/06, A61G 7/10, D07B 5/04, D07B 1/14

(54) **LIFT STRAP AND LIFT UNIT FOR SUPPORTING A SUBJECT COMPRISING THE SAME**

(30) Priority: 11.09.2018 US 201862729774 P
(71) Applicant: Liko Research & Development AB, 975 92 Luleå (SE)
(72) Inventor: NEWMAN, Jesse, Batesville, IN Indiana 47006-9167 (US); STEVENS, Kayla, Batesville, IN Indiana 47006-9167 (US)
(74) Representative: Findlay, Alice Rosemary

(57) **Abstract**

A lift unit for supporting a subject includes a lift body configured to travel along an overhead rail and a lift strap having a payout length extending from the lift body. The payout length retracts and extends relative to the lift body. The lift strap includes a woven fiber construction having a pattern integrated into the woven fiber construction. The pattern includes a plurality of markings indicative of the payout length.

## Description

The present specification generally relates lift straps for lift units and, more specifically, lift units for supporting a subject, lift straps, and methods of making lift straps.

Overhead lifting devices, or lift units, such as subject lifts used in the health care industry, may generally be coupled to an overhead rail system by a carriage which facilitates positioning the lift unit with respect to the overhead rail. The lift unit has a lift strap coupled to a lifting device to be lifted and lowered by the lift unit. The lifting device may be a lift bar, sling, or the like to support a subject (e.g., a person). Lift straps are generally produced by woven fibers that are not generally easily cleaned and/or disinfected without impacting the performance or characteristics of the lift strap. Accordingly, traditional lift straps may be subject to frequent replacement.

Furthermore, traditional lift straps are limited in they often fail to accurately reflect an indication of payout length or lift height. For example, the lift height of a lifting device is often determined by an operator visually inspecting the height of the lifting device relative to the person or support structure holding the person. This visual inspection may be inaccurate, leading the operator to readjusting the available payout length of the lift strap multiple times before being able to adequately support the person.

In one embodiment, a lift unit for supporting a subject includes a lift body configured to travel along an overhead rail and a lift strap having a payout length extending from the lift body. The payout length retracts and extends relative to the lift body. The lift strap includes a woven fiber construction having a pattern integrated into the woven fiber construction. The pattern includes a plurality of markings indicative of the payout length.

In another embodiment, a lift strap for a lift unit for supporting a subject includes a woven fiber construction and a fluid barrier coating. The woven fiber construction includes a plurality of fibers that are interwoven. The fluid barrier coating is applied to the plurality of fibers. The fluid barrier coating bonds to the plurality of fibers and forms erect whiskers that extend from a surface of the plurality of fibers.

In yet another embodiment, a method of making a lift strap for a lift unit for supporting a subject includes melting a mixture comprising polymer pellets and a dye to form a melted mixture, extruding the melted mixture to form a plurality of lift strap fibers, coating each of the lift strap fibers with a fluid barrier coating to form erect whiskers extending from a surface of each of the lift strap fibers, and weaving the plurality of lift strap fibers to produce the lift strap.

In yet another embodiment, a lift unit for supporting a subject includes a lift body configured to travel along an overhead rail, a lift motor housed within the lift body, and an emergency stop system operatively coupled to the lift motor. The emergency stop system includes a cord for activating the emergency stop system. The cord includes a fiber and a fluid barrier coating applied to the fiber, wherein the fluid barrier coating binds to the fiber and forms erect whiskers that extend from a surface of the fiber.

The invention at least in the preferred embodiments provides lift straps that are capable of being repeatedly cleaned and disinfected and that provide integrated lift height indicators.

The invention will now be further described by way of example with reference to the accompanying drawings, in which:
FIG. 1 depicts a lift unit with a lift strap, according to one or more embodiments shown and described herein;
FIG. 2 depicts a detailed view of a portion of the lift strap of FIG. 1, according to one or more embodiments shown and described herein;
FIG. 3A depicts a cross-section of a lift strap, according to one or more embodiments shown and described herein;
FIG. 3B depicts a cross-section of a worn lift strap, according to one or more embodiments shown and described herein;
FIG. 4A illustrates an embodiment of an emergency pull cord, according to one or more embodiments shown and described herein;
FIG. 4B illustrates an alternative embodiment of an emergency pull cord, according to one or more embodiments shown and described herein.
FIG. 5 illustrates flow chart including method steps for producing a lift strap, according to one or more embodiments shown and described herein.
FIG. 6 depicts an assembly for producing a lift strap fiber, according to one or more embodiments shown and described herein;
FIG. 7 illustrates a schematic diagram of a lift strap fiber with a coating applied thereon, according to one or more embodiments shown and described herein; and
FIG. 8 illustrates generally illustrates a surface of a lift strap fiber having a coating applied thereon, according to one or more embodiments shown and described herein.

Embodiments of the present disclosure are directed to a lift strap for a lift unit, such as those used in hospital and rehabilitation facility settings, and methods of making the same. The lift strap of the present disclosure may be provided with one or more markings that are integrated into the weave of the lift strap to indicate a payout length (e.g., a lift height). Based on these integrated markings, an operator can quickly and easily determine the appropriate pay out length of the lift strap for various lift settings (e.g., chair height, bed height, traveling height, etc.). In some embodiments, the fibers of the lift strap may be made from a material that is resistant to fading following exposure to harsh chemicals such as bleach. In embodiments, lift straps according to the present disclosure may include a fluid barrier coating that may prevent liquids from soaking into the lift strap fibers, such that the lift strap can easily be wiped clean. Accordingly, lift straps of the present disclosure may be useful in environments subject to strict disinfection or cleaning requirements (e.g., hospitals and other care facilities). Various embodiments of the lift strap and methods of making the same will be described in more detail herein.

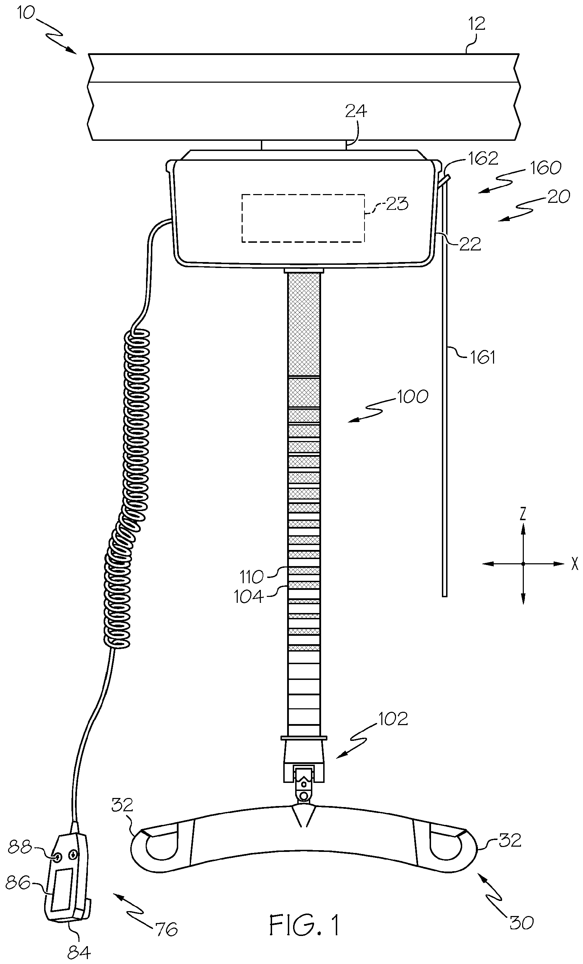

Referring now to FIG. 1, a lift system 10 is schematically depicted. The lift system 10 includes an overhead rail 12 and a lift unit 20 for supporting a subject. As will be described in greater detail below, the lift unit 20 may support a subject to allow the subject to travel along the overhead rail 12. While a subject as described herein generally refers to a person, such as a patient in a care facility (e.g., hospital, nursing home, physical therapy center, etc.), the present disclosure may be similarly applicable to non-human subjects including transportation of animals and objects.

Referring now to the overhead rail 12, the overhead rail 12 may be coupled to a ceiling of a room. In some embodiments a system of overhead rails 12 may be interconnected to allow travel of the lift unit 20 to multiple locations. For example, an overhead rail system may include interconnected overhead rails 12 leading to different rooms and/or locations within a building. Accordingly, to accommodate transportation of the lift unit 20 along the overhead rail 12, the overhead rail 12 may define a track along which the lift unit 20 travels.

The lift unit 20 is configured to be slidably engaged with and travel along the overhead rail 12 to transport a subject supported by the lift unit 20. The lift unit 20 may include a lift body 22, a carriage 24, a lift motor 23, a lift strap 100, and an emergency stop system 160. To accommodate transporting a subject a lift bar 30, and/or a sling (not shown) may be coupled to the lift unit 20 by the lift strap 100.

The lift body 22 generally defines an outside housing of the lift unit 20. The various components of the lift unit 20 may be coupled to and/or housed within the lift body 22. For example, the lift motor 23 may be housed within the lift body 22. While the lift body 22 is generally shown having a rectangular shape, it is contemplated that the lift body 22 have any polygonal or non-polygonal shape. In some embodiments, the lift unit 20 may include a power supply such as a battery or other voltage source (not shown) to provide power to the lift unit 20.

The carriage 24 may be coupled to the lift body 22. The carriage 24 may be configured to engage the overhead rail 12 such that the lift unit 20 is transportable therealong. For example, the carriage 24 may include support wheels that sit within and engage a track defined by the overhead rail 12. In some embodiments, the lift motor 23 (or a separate motor) may be operatively coupled to the support wheels of the carriage 24 to cause the support wheels to rotate such that the lift unit 20 is capable of translating along the overhead rail 12. In some embodiments, the support wheels of the carriage 24 may not be motorized.

Still referring to FIG. 1, the lift strap 100 may extend vertically downward from the lift body 22. The lift motor 23 may be operatively coupled to the lift strap 100 such that the lift motor 23 can cause a payout length of the lift strap 100 to extend from and retract into the lift body 22.

The lift strap 100 may have a woven fiber construction 104. That is, the lift strap 100 may be constructed from interwoven fibers. Weaving is generally a method of textile production in which fibers are interlaced to form a fabric or cloth. Typical characteristics of a woven fabric is the presence of two basic components including a warp thread, which is typically held stationary in tension on a frame or loom, and a weft thread which is drawn transversally through and inserted over-and-under the warp thread. How the fibers are interwoven may affect the characteristics (e.g., strength, rigidity, durability, etc.) of woven fabric. Some examples of types of weaves include but are not limited to plain/linen, oxford, twill, herringbone, dobby, satin, pile, Jacquard, and variations thereof. As will be described in greater detail herein, a fluid barrier coating may be applied to the fiber(s) of the lift strap 100 to allow the lift strap 100 to be easily cleaned and sanitized without damaging the fiber(s) of the lift strap 100.

Still referring to FIG. 1, the lift strap 100 may further include a pattern 110 integrated into the woven fiber construction 104. A pattern may be any arrangement of markings including, but not limited to, lines, shapes, symbols, words, and the like. A pattern as used herein may or may not be repeating. For example, the pattern 110 may include a plurality of markings that are integrated into the weave of the woven fiber construction 104. For example, the pattern 110 may be woven into the weave of the woven fiber construction 104 as the lift strap 100 is woven. For example, the weave pattern and/or color of fibers used for the weave may be adjusted to produce the pattern 110 within the weave of the woven fiber construction 104 of the lift strap 100. In other embodiments, the pattern 110 may be integrated into the weave of woven fiber construction 104 by embroidering the pattern 110 into the lift strap 100. In some embodiments, the pattern 110 may include a combination of interwoven and embroidered markings. The pattern 110 may indicate a predetermined payout length, lift height, and/or subject loading height. For example, the shape, color, and/or size of a marking of the pattern may indicate the predetermined payout length, lift height, and/or subject loading height (e.g., chair height, bed height, etc.). Examples are discussed in greater detail below.

In traditional lift straps, weaving a pattern such as described herein or alternating fiber colors may adversely impact the strength of the lift straps. However, as provided herein, and as determined through testing, lift straps 100 as described herein are at least as strong as conventional lift straps without markings. Test methods may include ASTM D2261-13, and ASTM D5034, wherein lift straps as provided herein perform at least as well as conventional lift straps. In some embodiments, testing may include a tensile strength test wherein constant load from greater than or equal to about 4,500 lbs. to less than or equal to about 6,000 lbs. is applied to a lift strap for twenty (20) minutes in either a lengthwise and/or a transverse direction. In embodiments, lift straps of the present disclosure are configured to withstand a tensile stress of greater than or equal to about 6,000 lbs. for at least 20 minutes.

In some embodiments, and as will be described in greater detail herein, the pattern 110, and/or the entire lift strap 100, is cleanable such that pattern 110 of the lift strap 100 is resistant to fading (i.e., colorfast) or other degradation from cleaning by chemicals (e.g., non-chlorine bleach, chlorine bleach, Virex® II 256, Oxivir® TB, providone iodine, Clorox®, alcohol, HB Quat, ForceField®, Wexcide, hydrogen peroxide, CSI Disinfectant RTU ("Ready to Use"), Peridox® RTU , sodium chloride, BenzaRid, water, Anioxy Spray WS, etc.) or other cleaning/disinfecting processes. By way of example, and not limitation, AATCC colorfastness testing methods, or other methods, may be used to test one or more of the above noted chemicals for their effect on the color of the lift strap 100. Using the AATCC Grey Scale for Color Change, the effect of the chemical on the color of the strap can be used to determine a level of colorfastness (e.g., class 1-5, where class 5 is negligible or no color alteration, class 4 is slight color alteration, class 3 is noticeable color alteration, class 2 is considerable color alteration and class 1 is much color alteration) of the lift strap 100. For example, the lift strap may be contacted with or dipped in a particular cleaning solution, such as taught by, for example, AATCC Test Method 6, 101, 172, 181, 190, and the like. The level of color fastness may then be determined using the AATCC Grey Scale Standard for Color Change noted above. Lift straps according to the present disclosure have a level of color fastness of class 4 or greater (e.g., 4 or 5) as measured in accordance with the AATCC Grey Scale Standard for Color Change. For example, the pattern 110 and/or lift strap 100 may have a color fastness in the presence of bleach (e.g., chlorine bleach) of at least about class 4 on the AATCC Grey Scale for Color Change.

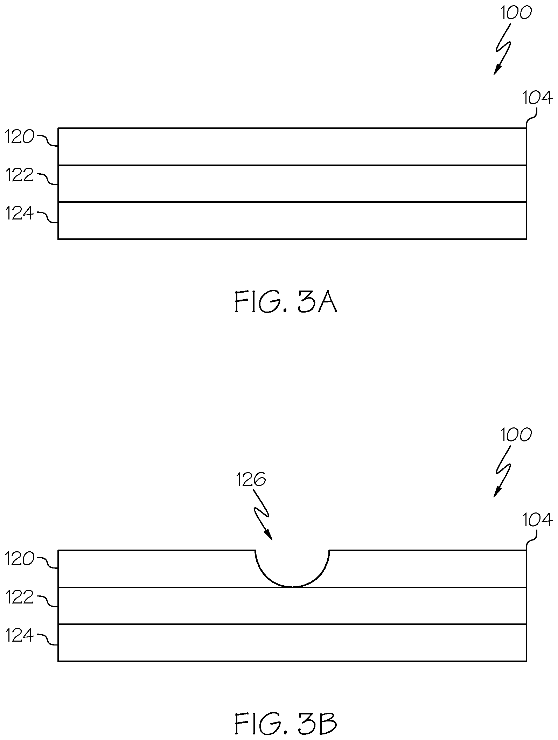

In some embodiments, pattern 110 and/or the lift strap 100 may be constructed so as to fade at a predetermined rate to indicate a replacement lift strap is needed. For example, a certain percentage of fading may be indicative of the lift strap 100 needing to be replaced. For example, the woven fiber construction 104 may include two or more fibers woven together such that a cross-section of the woven fiber construction 104, illustrated in FIG. 3A, forms distinct color layers wherein a first layer 120 is predominantly a first color and the second layer 122 is predominantly a second color that is different from the first color. The first layer 120 may form the outer or visible layer of the lift strap 100. Over time, as the outer layer breaks down as illustrated in FIG. 3B at worn spot 126 (e.g., due to washing, mechanical stress, etc.), the color of the second layer 122 may become visible through the outer layer. A certain percentage of the second layer 122 showing through the first layer 120 may indicate a replacement strap is needed. For example, about 5% or greater, about 10% or greater, about 20% or greater, about 30% or greater, about 40% or greater, about 50% or greater, etc. Such measurement may be estimated, for example, by visually observing the lift strap. For example, the inner first layer 120 may be white and the second layer 122 may be green. As the green of the second layer 122 shows through the white of the first layer 120, an operator may determine, based on visual inspection, that the lift strap 100 is in need of replacement.

As illustrated in FIGS. 3A and 3B, in some embodiments, there may be a third layer 124 that is predominantly a third color that is different from the second color and may be different or the same as the first color. In this way, the first layer 120 and the third layer 120, 124 may form the outer or visible layers of the lift strap 100. Accordingly, as the outer layer (e.g., first and/or third layer 120, 124) breaks down, color of the second layer 122 may become visible through either the first layer 120 or the third layer 124. As with the above example, the first layer 120 may be white, the second layer 122 may be green, and the third layer 124 may also be white. Accordingly, as the white layers experience wear, green of the second layer 122 may show through the first and/or third layers 120, 124. An operator may visually determine based on the amount of green estimated to be showing through the white layers, that the lift strap 100 is in need of replacement.

In some embodiments, the dye of the fibers of the pattern 110 may be formulated to fade over time in response to cleaning to indicate when the lift strap 100 needs to be replaced. For example, the dye may be configured to fade at a predetermined rate over the life of the lift strap 100. In some embodiments, a color fade of greater than or equal to 50%, greater than or equal to 75%, greater than or equal to 80%, greater than or equal to 90%, greater than or equal to 95% may be indicative of a need to replace the lift strap 100. Such measurements may be made, for example, by comparing the worn lift strap to a new lift strap or color swatch and estimating a difference in shade between the two.

As noted above, the pattern 110 as incorporated into the lift strap 100 may be indicative the payout length of the lift strap 100. For example, the pattern 110 may indicate a predetermined payout length corresponding to a subject loading height (e.g., bed height, chair height, wheel chair height, etc.). As noted above, traditional lift straps are limited in they often fail to accurately reflect any indication of payout length or lift height. For example, the lift height of a lifting device is often determined by an operator visually inspecting the height of the lifting device relative to the person or support structure holding the person. This visual inspection may be inaccurate leading the operator to readjusting the available payout length of the lift strap multiple times before being able to adequately support the person. The pattern 110 as provided herein may quickly and intuitively provide a payout length indication to an operator or user.

For example, the pattern 110 may include a hue gradient having a first end and a second end along the payout length. The hue gradient may include a hue that transitions from a first hue at the first end of the payout length to a second hue at the second end of the payout length. For example the lift strap 100 may become increasingly darker (or lighter) proximate to the lift body 22 as the payout length increases. For example, the pattern 110 may include a hue gradient that fades from white to black (other possible hues are contemplated and possible). Accordingly, a user/operator may correlate the payout length to the hue of the pattern 110 at a particular payout length. For example, wherein the pattern 110 is approximately 50% white and 50% black, the payout length is about halfway extended, which may correspond to a bed height, a chair height, or other particular height.

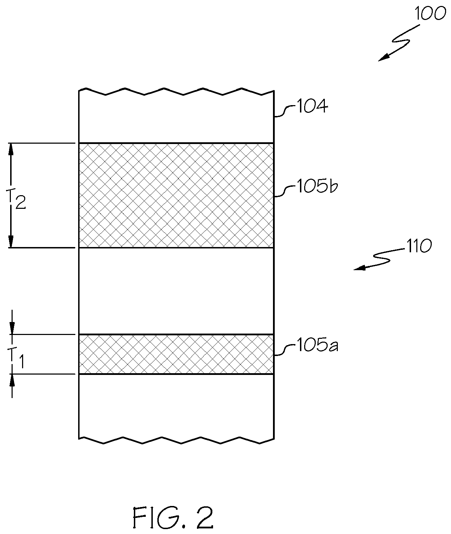

In some embodiments, and as illustrated in FIG. 1, the pattern 110 may include a plurality of markings such as delineated bands of color, wherein the bands of color become increasingly larger as the payout length increases. FIG. 2 illustrates a detailed view of the pattern with two bands of color. A first band/marking 105a has a first thickness T₁ and a second band/marking 105b, adjacent the first band 105a along the payout length, has a second thickness T₂. The first band 105a and the second band 105b may be spaced apart from one another in the vertical direction, as illustrated. The thickness T₁ of the first band 105a may be smaller than the thickness T₂ of the second band 105b. Subsequent bands may continue to increase in thickness as the payout length of the strap increases, such as illustrated in FIG. 1. Accordingly, a user may correlate a payout length of the lift strap 100 with a relative thickness of the bands proximate to the lift body 22. For example, the thinnest bands may be indicative of the lift strap being in an elevated position, and the thickest bands may be indicative of the full payout length of the list strap. Accordingly, intermediately thick bands may be indicative of a chair height, a bed height, or the like.

In some embodiments, the pattern 110 may include words, pictures, numbers and the like to allow a user to easily determine the payout length of the lift strap 100. For example, embroidered or woven into the list strap may be the word "bed" for bed height, "chair" for chair height, and the like. Accordingly, predetermined payout lengths may correspond to known heights (e.g., bed height, chair height, etc.)

Referring again to FIG. 1, and as noted above, the lift unit 20 may include an emergency stop system 160. The emergency stop system 160 may be operatively coupled to the lift motor 23 to cease operation of the lift motor 23. For example the emergency stop system 160 may stop the lift motor from paying out or retracting the lift strap 100. In some embodiments, the emergency system 200 may stop the lift motor from moving the lift unit 20 along the overhead rail 12. The emergency stop system 160 may include an input device 162 (e.g., a toggle, switch, button, key, or similar device) that when actuated (e.g., toggled, flipped, depressed, twisted, removed, etc.) turns off or otherwise stops the lift motor 23.

Coupled to the input device 162 may be an emergency pull cord 161. The emergency pull cord 161 may extend from the input device 162 a length so as to be able to be pulled by a user/operator. When pulled, the emergency pull cord 161 may actuate the input device 162, which causes the lift motor 23 to cease operations. The emergency pull cord 161 may be produced from one or more fibers (e.g., acetate fibers, acrylic fibers, nylon fibers, olefin/polyolefin fibers, polyester fibers, spandex fibers, and the like).

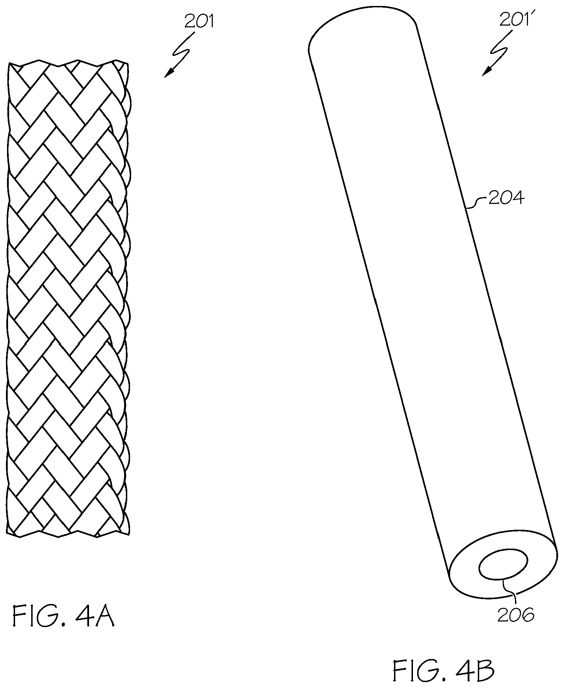

FIG. 4A illustrates an embodiment of an emergency pull cord 161. In this embodiment, the emergency pull cord 161 is made of multiple fibers braided together to form a rope. However, with reference to FIG. 4B it is contemplated that the emergency pull cord 161 may include a center core 206 that is surrounded may a jacket 208. The jacket 208 may have a woven fiber construction such as discussed above in regards to the lift strap 100. That is, the jacket 208 may be a tube woven from one or more fibers. As will be described in greater detail herein, a fluid barrier coating may be applied to the fiber(s) of the emergency pull cord 161 to allow the emergency pull cord 161 to be easily cleaned and sanitized without damaging the fiber(s) of the emergency pull cord 161.

Referring again to FIG. 1, to aid in transporting a subject a lift bar 30 may be coupled to the lift unit 20 through the lift strap 100. For example, the lift bar 30 may be attached to an end of the lift strap 100 distal from the lift motor 23 through a buckle 102 or other attachment feature. The sling bar 30 may have hooks 32 to which a sling (not shown) for supporting a weight of the subject may be attached. By operating the lift unit 20 to retract or extend a payout length of the lift strap 100, a caregiver or other user can use the lift unit 20 to raise and lower a subject.

For example, in embodiments, the lift unit 20 may include a control device 76 (such as hand control 84) to operate various aspects of the lift unit 20. The control device 76 may be configured to operate the lift motor 23 to control the payout length of the lift strap 100. The control device 76 may include buttons 88 and/or a display device 86 thereon. The buttons 88 may provide input to the control device 76 indicative of an operator's desire to extend or retract the payout length of the lift strap 100. The display device 86 may be configured to display information related to the lift system 10, the subject, the room, the facility, etc. Once the subject is in a raised positioned the subject may be conveyed along the overhead rail 12 either manually, or by using the control device 76 to regulate the motion of the lift unit 20 with respect to the overhead rail 12.

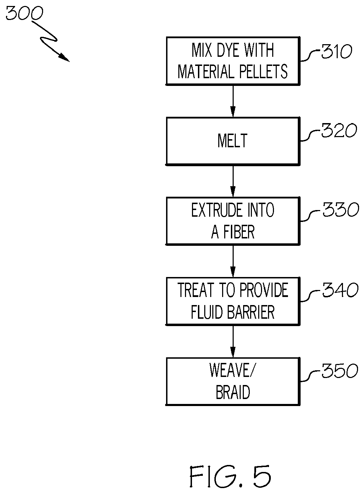

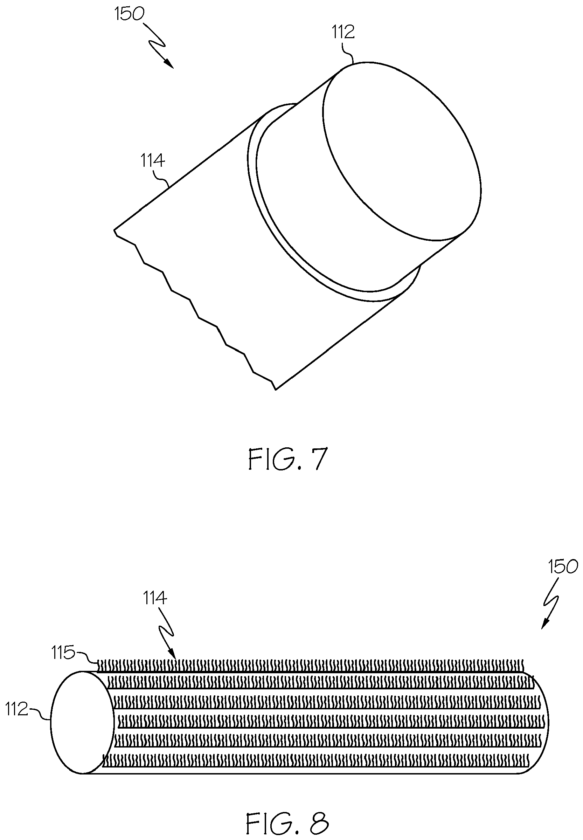

As will be described in greater detail herein, the lift strap 100 and/or the emergency pull cord 161 may have fluid barrier coating 114 applied thereto. As schematically illustrated in FIG. 8, which illustrates a single fiber 112 (e.g., lift strap fiber and/or emergency pull cord fiber) as an example, such fluid barrier coating 114 may be configured to bind to the fiber 112 to produce rows of whiskers 115 that stand erect and extend from the fiber 112. These whiskers 115 may be hydrophobic and may cause liquid that comes in contact with the lift strap 100 and/or emergency pull cord 161 to bead up such that the liquid may roll away or be easily wiped away. Accordingly, the fluid barrier coating 114 decreases the ability for bacteria to attach to the lift strap 100 and/or emergency pull cord 161. The fluid barrier coating 114 will be discussed in greater detail herein and in particular with regards to the method illustrated in FIG. 5.

Methods of making lift straps and/or emergency pull cords are also provided herein. In particular, the lift straps and/or emergency pull cords may be produced from solution dyed polyester fibers that are then coated, as noted hereinabove, with a fluid barrier coating to provide cleanability/wipability without affecting the integrity of the lift strap 100/emergency pull cord 161. Referring now to FIG. 5, a flowchart 300 illustrating the method of manufacturing a lift strap 100 and/or emergency pull cord 161 is depicted. It is noted that while a certain number of steps are illustrated, a fewer or greater number of steps may be included without departing from the scope of the present disclosure. Moreover, though the various steps are illustrated as having a particular order, one of skill in the art may understand that the various steps may be performed in a different order without departing from the scope of the present disclosure.

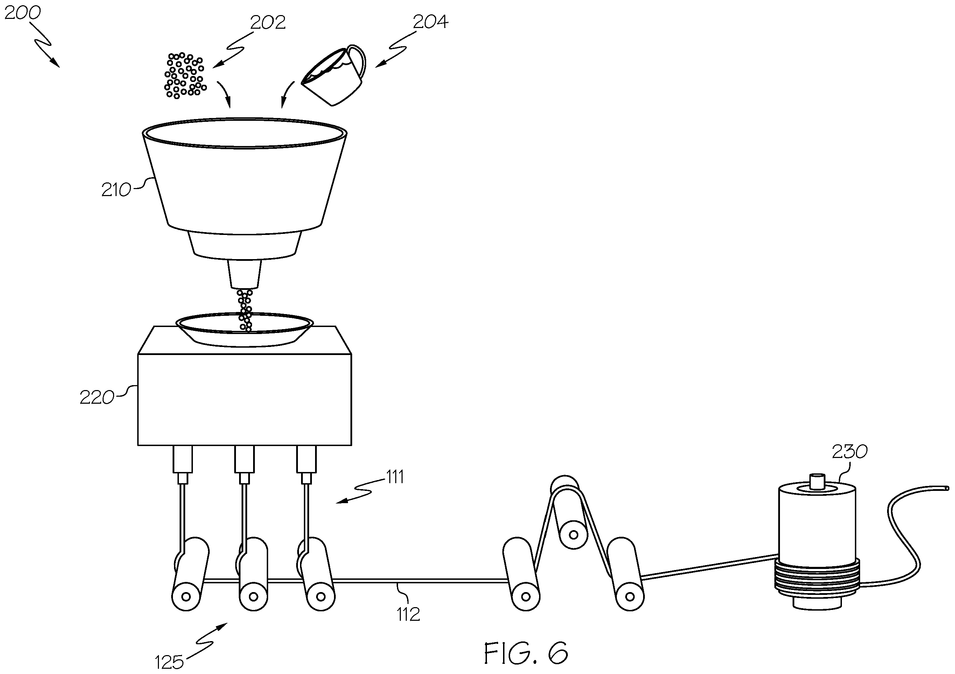

The method depicted allows for the production of a cleanable lift strap 100 and/or emergency pull cord 161 that may be repeatedly cleaned with harsh chemicals (e.g., bleach) and/or disinfected without detrimentally affecting the performance or appearance of the lift strap 100. The method depicted in FIG. 5 is best understood in conjunction with FIG. 6, which schematically illustrates the production of a fiber 112 for producing a lift strap 100 or an emergency pull cord 161, as described above.

In various embodiments, methods of producing either a lift strap 100 and/or emergency pull cord 161 may include solution-dying a lift strap and/or emergency pull cord material (e.g., acetate, acrylic, nylon, olefin/polyolefin, polyester, spandex, and the like) prior to creation of the fiber. Solution dyeing allows a color to be distributed throughout an entire fiber and not just on the surface as in traditional external/batch dyeing processes. That is, in traditional external dying processes the fiber is dipped in dye, and the dye is only able to penetrate the surface of the fiber. Accordingly, the dye may be susceptible removal by bleaching or other cleaning processes. Solution dying, however, may provide color fastness in the presence of bleach or other cleaning substances, as noted above. Accordingly, referring collectively to FIGS. 5 and 6, at step 310, dye 204 of a chosen shade may be mixed with a fiber material 202. The fiber material 202 may be provided as pellets, particles, or chips, for example, which will be extruded into lift strap 100 fibers for the lift strap 100. For example, the fiber material 202 may include, for example, acetate, acrylic, nylon, olefin/polyolefin, polyester, spandex, and the like. In some embodiments, the fiber mater 202 may be a combination of materials. Wherein the fiber material 202 include polyester, polyester pellets may be mixed with a desired dye 204 shade in a dye bath 210. At step 320, the fiber material 202 may be melted to form a mixture of the fiber material 202 and the dye 204. That is, the dye 204 may be thoroughly mixed with the melted fiber material 202 to fully incorporate the dye 204 throughout the fiber material 202.

The mixture may be then be extruded to form a fiber 112 (step 330). Extrusion of a fiber 112 may include forcing the mixture through a spinneret 220 or die. Forcing the mixture of melted material pellets and dye 204 through the spinneret 220 causes the spinneret 220 to produce multiple filaments 111 which are drawn by rollers 125. The multiple filaments 111 may then be combined to form the fiber 112, which may then be wound onto a spool 230. As noted above, this method of production of a fiber 112 may be advantageous because it utilizes a solution dye process wherein the fiber material 202 is melted and mixed with the dye 204 such that the color is integrated into the fiber 112 in contrast to batch dyeing which results in a fiber which may be susceptible to removal of the dye 204 during bleach cleaning operations. However, using the extrusion process as described herein, the dye 204 is integral with the fiber 112 and is colorfast in the presence of bleach. As used herein, the phrase "colorfast" means that the fiber 112 may have a rating of at least about class 4 on the AATCC Grey Scale for Color Change when tested for color fastness. Accordingly, in the present process creates a fiber which is bleach cleanable.

At step 340, the fiber 112 is treated to provide a fluid barrier coating 114 over the fiber 112. For example, with reference to FIGS. 7 and 8, a coated fiber 150 is generally depicted. In such embodiment, the fiber 112 may be coated with any fluid barrier coating 114 that is capable of producing a fluid barrier over the fiber 112. That is, the fluid barrier coating 114 may prevent fluids from permeating therethrough and soaking into the fiber itself. Example coatings include a polymeric material such as a thermoplastic polyurethane or a perfluoropolymer. In a specific embodiment, the fiber 112 may be coated with a zinc based perfluoropolymer such as Nanotex®.

After coating, the fiber 112, or the entire lift strap 100/emergency pull cord 161, may be subjected to a heat treatment to cure the fluid barrier. For example, the lift strap fiber 112 may be passed through an oven for a time sufficient to cure the fluid barrier coating 114. Such time and temperature may be dependent on the fluid barrier coating material. For example, a Nanotex® fluid barrier coating may cure at a temperature of about 300 °F to about 325 °F for a time of about one minute.

At step 350, the fiber 112 may then be woven into a lift strap 100 or woven/braided into an emergency pull cord 161, such as shown in FIG. 1. In alternative embodiments, the fiber 112 may be woven/braided into the lift strap 100 and/or emergency pull cord 161 prior to treatment with the fluid barrier coating 114. As noted above, any conventional weaving methods may be used, without departing from the scope of the present disclosure. A pattern of weaving used to weave the lift strap 100 may produce a pattern 110 along a length of the lift strap 100 indicative of a payout length, as described above.

As discussed in greater detail above with reference to FIG. 1, the pattern 110 may include a plurality of markings integrated into the woven fiber construction 104 of the lift strap 100. The various markings may correspond to predetermined pay out lengths, subject loading heights, and/or predetermined lift heights. For example, a user/operator may pay out a payout length of the lift strap 100 using the lift motor 23 to a marking of the plurality of markings. For example, based on a characteristic of the marking (e.g., size, shape, color, etc.) the user/operator may correlate a particular marking with a predetermined pay out length corresponding to a subject loading height (e.g., chair height, bed height, etc.). Examples are discussed in greater detail above.

After weaving and/or coating, with reference to FIG. 1, the method may further include assembling the lift strap 100 and/or the emergency pull cord 161 to the lift unit 20. Such may include affixing an end of the lift strap 100 into the lift body 22 of the lift unit 20 and attaching the pull cord 201 to the input device 162 of the emergency stop system 160.

As noted above, the fluid barrier coating 114 may prevent fluids from absorbing into the fiber 112 and may provide greater cleanability. In particular, once cured the fluid barrier coating 114, the fiber 112, the lift strap 100, and/or the emergency pull cord 161 be may be repeatedly cleaned with harsh chemicals (e.g., bleach) and/or disinfected, without disturbing the integrity of the fluid barrier coating 114 and/or the fiber 112 under the fluid barrier coating 114. Accordingly, a user may easily clean and disinfect fibers of the lift strap 100 (i.e., lift strap fiber(s)) and/or the emergency pull cord (201) (i.e., pull cord fiber(s)) according to the present disclosure.

FIG. 8 illustrates a fluid barrier coating 114 that is a zinc-based perfluoropolymer (e.g., Nanotex®) applied to the fiber 112. Once cured, the zinc-based perfluoropolymer may bind to the surface of the fiber 112 and impart a low energy surface that is hydrophobic. That is, the fluid barrier coating 114 may repel fluid that comes in contact with the coated fiber 150. The zinc-based perfluoropolymer coating may in some embodiments modify the surface of the fiber 112 to produce tiny (e.g., micro or nano-scale) rows of whiskers 115. The rows of whiskers 115 may be oriented substantially perpendicular to the surface of the fiber 112. The rows of whiskers 115 may repel liquid that contacts the surface of the lift strap 100 and/or emergency pull cord 161. For example, liquids that come in contact with the lift strap 100 and/or emergency pull cord 161 may bead and roll or be wiped away without absorbing into the fiber 112.

As should now be understood, the present application is directed to a lift strap for a lift unit, such as those used in hospital settings, and methods of making the same. The lift strap of the present disclosure may be provided with one or more markings that are integrated into the weave of the lift strap to indicate a payout length (e.g., a lift height). Based on these integrated markings, an operator can determine the appropriate pay out length of the lift strap for various lift settings (e.g., chair height, bed height, traveling height, etc.). The fibers of the lift strap may be made from a material that is resistant to fading and from harsh chemicals such as bleach. In embodiments, the fibers of the lift strap and/or an emergency pull cord according to the present disclosure may include a woven fiber construction and a fluid barrier coating over the woven fiber construction. The fluid barrier coating may prevent bacteria from attaching to the lift strap and/or emergency pull cord. Accordingly, lift straps and/or emergency pull cords of the present disclosure may be useful in environments subject to strict disinfection or cleaning requirements (e.g., hospitals and other care facilities).

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

While particular embodiments have been illustrated and described herein, it should be understood that various other changes and modifications may be made.

Embodiments can be described with reference to the following numbered clauses, with preferred features laid out in the dependent clauses:
1. A lift unit for supporting a subject, comprising: a lift body configured to travel along an overhead rail; a lift strap having a payout length extending from the lift body, the payout length being retractable and extendable relative to the lift body, the lift strap comprising: a woven fiber construction; and a pattern integrated into the woven fiber construction, the pattern comprising a plurality of markings indicative of the payout length.
2. The lift unit of clause 1, wherein the pattern is woven into the woven fiber construction.
3. The lift unit of clause 1 or 2, wherein the pattern is embroidered into the woven fiber construction.
4. The lift unit of any of clauses 1-3, wherein the pattern has a color change resistance in a presence of bleach of at least about class 4 on an AATCC Grey Scale for color change.
5. The lift unit of any of clauses 1-4, wherein the pattern comprises a hue gradient having a first end and a second end along the payout length, the hue gradient comprising a hue that transitions from a first hue at the first end of the payout length to a second hue at the second end of the payout length.
6. The lift unit of and of clauses 1-3, wherein a thickness of a first marking of the plurality of markings is less than a thickness of a second marking of the plurality of markings adjacent to the first marking.
7. The lift unit of any of clauses 1-6, wherein the pattern indicates a predetermined payout length corresponding to a subject loading height.
8. A lift strap for a lift unit for supporting a subject, the lift strap comprising: a woven fiber construction comprising a plurality of fibers that are interwoven; and a fluid barrier coating applied to the plurality of fibers, wherein the fluid barrier coating binds to the plurality of fibers and forms erect whiskers that extend from a surface of the plurality of fibers.
9. The lift strap of clause 8, wherein the woven fiber construction comprises a pattern integrated into the woven fiber construction indicative of a payout length of the lift strap.
10. The lift strap of clause 9, wherein the pattern is woven into the woven fiber construction.
11. The lift strap of clause 9 or 10, wherein the pattern comprises a hue gradient having a first end and a second end along the payout length, the hue gradient comprising a hue that transitions from a first hue at the first end of the payout length to a second hue at the second end of the payout length.
12. The lift strap of clause 9, wherein the pattern comprises a plurality of markings, wherein a thickness of a first marking of the plurality of markings is less than a thickness of a second marking of the plurality of markings adjacent to the first marking.
13. The lift strap of clause 9, wherein the pattern indicates a predetermined payout length corresponding to a subject loading height.
14. A method of making a lift strap for a lift unit for supporting a subject, the method comprising: melting a mixture comprising polymer pellets and a dye to form a melted mixture; extruding the melted mixture to form a plurality of lift strap fibers; coating each of the lift strap fibers with a fluid barrier coating to form erect whiskers extending from a surface of each of the lift strap fibers; and weaving the plurality of lift strap fibers to produce the lift strap.
15. The method of clause 14, further comprising weaving a pattern comprising a plurality of markings into the lift strap from a first end of the lift strap to a second end of the lift strap, the pattern being indicative of a payout length of the lift strap.
16. The method of clause 14, further comprising embroidering a pattern comprising a plurality of markings into the lift strap from a first end of the lift strap to a second end of the lift strap, the pattern being indicative of a payout length of the lift strap.
17. The method of clause 15 or 16, wherein a thickness of a first marking of the plurality of markings is less than a thickness of a second marking of the plurality of markings adjacent to the first marking.
18. The method of any of clauses 15-17, wherein the pattern is configured to indicate a predetermined payout length corresponding to a subject loading height.
19. The method of any of clauses 15-18, wherein the pattern comprises a hue gradient having a first end and a second end along the payout length, the hue gradient comprising a hue that transitions from a first hue at the first end of the payout length to a second hue at the second end of the payout length.
20. The method of clause 14, further comprising affixing an end of the lift strap to a lift body of the lift unit, wherein the lift strap has a payout length extending from the lift body, the payout length being retractable and extendable relative to the lift body.
21. A lift unit for supporting a subject, comprising: a lift body configured to travel along an overhead rail; a lift motor housed within the lift body; and an emergency stop system operatively coupled to the lift motor and comprising a cord for activating the emergency stop system, wherein the cord comprises: a fiber; and a fluid barrier coating applied to the fiber, wherein the fluid barrier coating binds to the fiber and forms erect whiskers that extend from a surface of the fiber.
22. The lift unit of clause 21 further comprising a lift strap having a payout length extending from the lift body, the payout length being retractable and extendable relative to the lift body, the lift strap comprising: a woven fiber construction; and a pattern integrated into the woven fiber construction, the pattern comprising a plurality of markings indicative of the payout length.
23. The lift unit of clause 22, wherein the fluid barrier coating is also applied to the lift strap.

## Claims

1. A lift strap for a lift unit for supporting a subject, the lift strap comprising:
a woven fiber construction comprising a plurality of fibers that are interwoven; and
a fluid barrier coating applied to the plurality of fibers, wherein the fluid barrier coating binds to the plurality of fibers and forms erect whiskers that extend from a surface of the plurality of fibers.

2. The lift strap of claim 1, wherein the woven fiber construction comprises a pattern integrated into the woven fiber construction indicative of a payout length of the lift strap.

3. The lift strap of claim 2, wherein the pattern is woven into the woven fiber construction.

4. The lift strap of claim 2 or 3, wherein the pattern comprises a hue gradient having a first end and a second end along the payout length, the hue gradient comprising a hue that transitions from a first hue at the first end of the payout length to a second hue at the second end of the payout length.

5. The lift strap of claim 2 or 3, wherein the pattern comprises a plurality of markings, wherein a thickness of a first marking of the plurality of markings is less than a thickness of a second marking of the plurality of markings adjacent to the first marking.

6. The lift strap of any of claims 2 to 5, wherein the pattern indicates a predetermined payout length corresponding to a subject loading height.

7. The lift strap of claim 1, wherein the woven fabric construction comprises
a pattern integrated into the woven fiber construction, the pattern comprising a plurality of markings indicative of the payout length.

8. The lift strap of claim 7, wherein the pattern is woven into the woven fiber construction.

9. The lift strap of claim 7, wherein the pattern is embroidered into the woven fiber construction.

10. The lift strap of any of claims 7 to 9, wherein the pattern comprises a hue gradient having a first end and a second end along the payout length, the hue gradient comprising a hue that transitions from a first hue at the first end of the payout length to a second hue at the second end of the payout length.

11. The lift strap of any of claims 7 to 10, wherein a thickness of a first marking of the plurality of markings is less than a thickness of a second marking of the plurality of markings adjacent to the first marking.

12. The lift strap of any of claims 7 to 11, wherein the pattern indicates a predetermined payout length corresponding to a subject loading height.

13. The lift strap of any of claims 7 to 12, wherein the pattern has a color change resistance in a presence of bleach of at least about class 4 on an AATCC Grey Scale for color change.

14. A lift unit for supporting a subject, comprising:
a lift body configured to travel along an overhead rail;
a lift motor housed within the lift body; and
the lift strap of any preceding claim coupled to the lift motor and having a payout length extending from the lift body, the payout length being retractable and extendable relative to the lift body:

15. The lift unit of claim 14, further comprising an emergency stop system operatively coupled to the lift motor and comprising a cord for activating the emergency stop system, wherein the cord comprises:
a fiber; and
a fluid barrier coating applied to the fiber, wherein the fluid barrier coating binds to the fiber and forms erect whiskers that extend from a surface of the fiber.
